# EUROPÄISCHE PATENTSCHRIFT

(11) **EP 2 518 849 B1**
(45) Veröffentlichungstag und Bekanntmachung des Hinweises auf die Patenterteilung: **21.03.2018**
(21) Anmeldenummer: 12002978.0
(22) Anmeldetag: 27.04.2012
(51) Int. Cl.: H02G 3/22, H02G 15/013, F16L 5/06, H02G 3/06

(54) **GEHÄUSEDURCHFÜHRUNG (KABELVERSCHRAUBUNG)**
HOUSING FEEDTHROUGH (CABLE CONNECTION)
PASSAGE DE BOÎTIER (VISSAGE DE CÂBLE)

(30) Priorität: 28.04.2011 DE 102011018882
(43) Veröffentlichungstag der Anmeldung: 31.10.2012
(73) Patentinhaber: Jacob GmbH, 71394 Kernen (DE)
(72) Erfinder: Sohn, Wolfgang, 71672 Rielingshausen (DE)
(74) Vertreter: Jendricke, Susann

(56) Entgegenhaltungen:
- EP-A2- 0 232 831
- DE-A1-102005 017 690
- DE-A1-102009 033 948
- DE-U1-202008 001 842
- US-B1- 6 488 317

## Beschreibung

Die Erfindung betrifft eine Gehäusedurchführung für zugentlastete, gegen Verdrehen gesicherte Kabel zur Montage in einer Durchtrittsöffnung einer Gehäusewand, mit einem Grundkörper und einer Hutmutter, wobei der Grundkörper eine Kabeldichtung umfasst und wobei die Hutmutter hierüber befestigbar ist und wobei der Grundkörper von der im Montagezustand der Hutmutter gegenüberliegenden Seite der Gehäusewand durch die Durchtrittsöffnung bis zu einem Anschlag durchsteckbar ist.

Die Gehäusedurchführung bzw. die Kabelverschraubung besitzt eine Abdichtfunktion, um das Eindringen von Flüssigkeiten und Stäuben in das Gehäuse zu vermeiden. Der Grundkörper bzw. Stutzen wird in eine Durchtrittsöffnung einer Gehäusewand gesteckt und nimmt das Kabel auf. Der Stutzen besitzt ein Gewinde, auf das eine Hutmutter aufschraubbar ist. Innerhalb des Stutzens ist ein ringförmiger Klemmkäfig aus elastischem Material mit einer Dichtung angeordnet, der von der Hutmutter beim Aufschrauben auf den Stutzen druckbeaufschlagt wird, so dass es zur Verdrehsicherung und Zugentlastung des Kabels bzw. der elektrischen Leitung kommt, das bzw. die durch den Stutzen hindurchgeführt ist.

Wie in Dokument DE 20 2007 017 765 U1 beschrieben und in der Praxis häufig anzutreffen, wird die Kabelverschraubung von der Gehäuseaußenseite durch die Durchtrittsöffnung der Gehäusewand in das Gehäuseinnere eingeführt, bis sich die Kabelverschraubung zu beiden Seiten der Durchtrittsöffnung erstreckt. Die Fixierung erfolgt dann auf der Gehäusewandaußenseite durch eine separate Kontermutter, die das die Durchtrittsöffnung durchgreifende, gegenüber der Durchtrittsöffnung querschnittsgrößere Ende des Grundkörpers gegen die Gehäuseinnenwand presst, indem auch sie auf ein Außengewinde des Grundkörpers aufgeschraubt wird. Zur Durchführung des querschnittsgrößeren Endes des Grundkörpers sind flexible Elemente vorgesehen, die beim Durchführen radial nach innen geformt werden und dann, auf der Gehäuseinnenseite wieder ihre Ursprungsform annehmen und sich radial nach außen bewegen.

Elektrische Leitungen enthalten diverse Kabel und werden an elektrische Geräte und Einrichtungen, wie Maschinen und Schaltschränke, angeschlossen. Die elektrischen Leitungen sind in der oben beschriebenen Kabelverschraubung geführt und befestigt. Damit eine Verankerung der Kabelverschraubung in der Wand stattfinden kann, durchgreift die Kabelverschraubung die innerhalb eines flächigen Bauteil bzw. einer Gehäusewand der Maschine oder des Schaltschrankes gebildete Durchtrittsöffnung. Es geht hier um gewindelose Durchtrittsöffnungen. Die Verschraubung erfolgt an der Gehäuseaußenseite. Beim Festschrauben müssen sowohl an dem an der Gehäuseinnenseite positionierten Teil der Kabelverschraubung als auch an dem an der Gehäuseaußenseite positionierten Teil der Kabelverschraubung, insbesondere an der dortigen Kontermutter, Werkzeuge angesetzt werden, um die Kabelverschraubung sicher zu befestigen. Bei großformatigen Schaltschränken oder an schwer zugänglichen Orten, wie geschlossenen Schränken, kann dies wegen unzureichender Armlänge nicht von einer Person bewerkstelligt werden. Die Folge ist ein erhöhter Personalaufwand. Das Problem des erhöhten Personalaufwandes wird durch den Stand der Technik bereits grundsätzlich gelöst.

In der DE 10 2005 017 690 A1 ist ein Montageansatz beschrieben, der um den gesamten Umfang verteilte federnde Zungen aufweist. Die Zungen werden während des Durchtritts von der Gehäuseaußenseite her kommend durch eine Durchtrittsöffnung zunächst radial nach innen bewegt, damit der Montageansatz die Durchtrittsöffnung passieren kann. Sobald der Kopfteil an der Gehäuseinnenwand austritt, entspannen sich die Zungen und die Unverlierbarkeit ist hergestellt. Über Zentrierflächen, die an der Randinnenfläche der Durchtrittsöffnung der Gehäusewand anliegen, wird der Montageansatz zentriert. Im Falle eines Kabelbruchs oder sonstiger Schäden der elektrischen Leitung ist eine Demontage nur mit einem Spezialwerkzeug möglich. Das Spezialwerkzeug kann nur von der Gehäuseinnenseite auf den Montageansatz gesetzt werden, wenn zuvor das Kabel von der Klemmstelle gelöst wurde.

Aus der DE 195 15 860 C2 ist eine Befestigungsvorrichtung bekannt, an deren Kopfteil um den Umfang verteilte Biegeeinheiten angeformt sind. Sobald das Kopfteil die Durchtrittsöffnung der Gehäusewand von außen kommend passiert hat, wird mittels einer Verriegelungseinheit, die nur mit einem Spezialwerkzeug betätigt werden kann, eine Verformung bzw. Verbördelung der Biegeeinheiten an der Gehäuseinnenseite vorgenommen. Im Resultat wird eine Wandmontage erhalten, die wegen des Spezialwerkzeuges sehr aufwendig ist und zudem nicht mehr gelöst werden kann. Eine Demontage der Befestigungsvorrichtung ist mit deren Zerstörung verbunden.

In der DE 20 2008 001 842 U1 wird eine Befestigung beschrieben, bei der am Kopfteil des Stutzens zwei radial abragende Widerlagerbereiche gegenüberliegend angebracht sind. Die vom Stutzen wegweisende Seite der Widerlagerbereiche hat einen größeren Durchmesser als die Durchtrittsöffnung. Die dem Stutzen zugewandte Seite der Widerlagerbereiche ist so ausgeführt, dass eine Widerlagerseite in die Durchtrittsöffnung, von außen nach innen in das Gehäuseinnere eingeschwenkt werden kann, wobei zunächst der eine Widerlagerbereich die Durchtrittsöffnung durchgreift und anschließend der andere Widerlagerbereich hindurchgeschwenkt wird. Mittels einer auf das Gewindeteil des Stutzens aufschraubbaren Kontermutter wird dann die Steckvorrichtung an der gehäusewandaußenweite festgelegt. Bei dieser Lösung wird die Verwendung eines Spezialwerkzeuges bei der Demontage vermieden und die Demontage ist auch von der Gehäuseaußenseite möglich, zudem ist der Stutzen nach der Demontage noch verwendbar, bei dieser Lösung muss jedoch aufwendig eine Kontermutter von außen aufgeschraubt werden, um den Stutzen gegen eine axiale Bewegung in Richtung Gehäuseinnerem zu sichern.

Die aus dem vorgenannten Stand der Technik bekannten Gehäusedurchführungen bzw. Kabelverschraubungen sind dahingehend nachteilig, dass sie zur Herstellung einer festen Verbindung zwischen Grundkörper und Gehäusewand entweder ein Zusatzteil oder ein Spezialwerkzeug für Montage und/oder Demontage benötigen, in allen Fällen jedoch zur Montage des Stutzens mehrere Arbeitsgänge.

Ausgehend von diesem Stand der Technik liegt der Erfindung die Aufgabe zugrunde, eine Gehäusedurchführung bzw. eine Kabelverschraubung anzugeben, die eine einfache Montage ermöglicht und im Bedarfsfall demontiert und wiederverwendet werden kann.

Die voranstehende Aufgabe wird nach einer ersten Alternative durch die Merkmale des Patentanspruches 1 gelöst. Danach ist eine Gehäusedurchführung / Kabelverschraubung der in Rede stehenden Art derart ausgestaltet, dass die Hutmutter Mittel zur lösbaren Verbindung des Grundkörpers und der Hutmutter mit der Gehäusewand aufweist, wobei es sich um Mittel handelt, die sich gegen die Gehäusewand stützen und damit die Gehäusewand zwischen Grundkörper und Hutmutter einklemmen.

Zunächst ist erkannt worden, dass das im Stand der Technik bei Kabelverschraubungen durchgehend das Prinzip verwirklicht wird, von der Gehäusewandseite aus zu arbeiten, auf der die Hutmutter der Kabelverschraubung positioniert ist. Es handelt sich dabei in der Regel um die Gehäuseaußenseite. Auf der anderen Seite der Gehäusewand werden gemäß dem Stand der Technik mitunter zusätzliche Verformungsschritte vorgenommen oder es erfolgt eine Zerstörung, wenn demontiert werden soll. Beim Stand der Technik muss der Grundkörper zunächst durch die Gehäuseöffnung gesteckt werden, um dann hinterzuhaken oder zu rasten. Diese Lösung ist immer komplexer und birgt immer die Gefahr, dass der Grundkörper auch wieder herausrutschen kann. Hiervon komplett abweichend ist gemäß der ersten Alternative der Erfindung erfindungsgemäß erkannt worden, dass die Montage vereinfacht werden kann, wenn die Hutmutter Mittel zur lösbaren Verbindung des Grundkörpers und der Hutmutter mit der Gehäusewand aufweist, wobei es sich um Mittel handelt, die sich gegen die Gehäusewand stützen und damit die Gehäusewand zwischen Grundkörper und Hutmutter einklemmen. Die Montage kann von der Gehäuseseite her durchgeführt werden, die der Hutmutter der Kabelverschraubung gegenüber liegt. Bei der vorgenannten Gehäuseseite handelt es sich in der Regel um die Gehäuseinnenseite. Bei der erfindungsgemäßen Kabelverschraubung wird der Grundkörper bis zu einem Anschlag durch die Durchtrittsöffnung gesteckt und danach bequem und einfach auf der gegenüberliegenden Seite gearbeitet.. Erfindungsgemäß weist die Gehäusedurchführung gemäß der ersten Alternative der Erfindung eine besonders gestaltete Hutmutter auf. Die Hutmutter umfasst Mittel zur lösbaren Verbindung des Grundkörpers und der Hutmutter mit der Gehäusewand und bewirkt so die Verriegelung des Grundkörpers in axialer Richtung. Hierzu ist die Hutmutter mit Abstützmitteln ausgestattet, die sich nach dem Anziehen der Hutmutter gegen die Gehäusewand abstützen und damit die Gehäusewand zwischen Grundkörper, insbesondere dessen Anschlag, und der Hutmutter einklemmen. In vorteilhafter Weise wird keine zusätzliche Kontermutter mehr benötigt, sondern die Hutmutter, die bisher nur die Aufgabe hatte, das Kabel zu halten und abzudichten, nimmt nun als weitere Funktion auch die Fixierung des Grundkörpers an der Gehäusewand wahr. In einem Montageschritt wird also das Kabel abgedichtet und gehalten und gleichzeitig die Grundkörperfixierung realisiert.

Die neue Montagerichtung - in der Regel ausgehend von der Gehäuseinnenseite - hat in der Kombination mit einer Verriegelung an der gegenüberliegenden Gehäuseseite - in der Regel an der Gehäuseaußenseite, ob nun durch die Hutmutter oder eine separate Kontermutter, den Vorteil, dass der Grundkörper mit einem einfachen umlaufenden Flansch als Anschlag ausgestattet sein kann und bereits damit sicher gehalten ist. In vorteilhafter Weise wird eine einfache Bauform des Teils der Kabelverschraubung ermöglicht, der an der von der Hutmutter wegweisenden Gehäusewand im montierten Zustand positioniert ist. Es wird ein zeitgleicher, von beiden Seiten der Gehäusewand notwendiger Arbeitsschritt vermieden und der Grundkörper selber kann in einem Arbeitsschritt an der Gehäusewand befestigt werden.

Nach einer bevorzugten Ausführungsform der ersten Alternative der Erfindung, könnte der Grundkörper einer hilfsweisen Vorfixierung in der Durchtrittsöffnung zur Erleichterung der Kabelmontage unterzogen werden. Hierzu könnte der Grundkörper Mittel zur lösbaren Verbindung mit der Gehäusewand aufweisen. Die Verbindungsmittel könnten bspw. in Form von Rastnasen vorliegen. Die Rastnasen könnten zwischen dem Anschlag des Grundkörpers und der Hutmutter so angeordnet sein, dass sie mit dem die Durchtrittsöffnung umgebenden Gehäusewandrand zusammenwirken. Die Rastnasen könnten sich beim Durchführen des Grundkörpers durch die Durchtrittsöffnung des Gehäusewand nach innen verformen, nach Durchtritt nach außen spreizen und bspw. mit radialen Flächen den Gehäusewandrand übergreifen oder umgreifen. Auf diese Weise könnte zunächst eine hilfsweise Befestigung des Grundkörpers in der Durchtrittsöffnung der Gehäusewand hergestellt werden, der damit sowohl radial als auch axial in Richtung der Hutmutter bzw. in der Regel in Richtung Außenseite der Gehäusewand fixiert ist. Da bereits durch den Anschlag die axiale Verschiebung des Grundkörpers in Richtung Hutmutter limitiert ist, ist vor allem die radiale Fixierung im Hinblick auf die Einführung des Kabels in den Grundkörper und dessen Verbleib in der Durchtrittsöffnung von Vorteil. Mit Blick auf eine Demontage ist von Vorteil, dass der Grundkörper, nachdem die tatsächliche Befestigung wider gelöst ist, bei der vorbeschriebenen hilfsweisen Vorfixierung mit mäßigem Kraftaufwand überwunden werden. Der zur Demontage gelöste und nur noch - resultierend aus der Vorfixierung - über die Rastnasen mit der Gehäusewand verbundene Grundkörper könnte kurzerhand in Richtung Innenseite der Gehäusewand bewegt werden. Dieser mäßige Kraftaufwand gewährleistet eine einfache Demontage ohne Hilfswerkzeuge durch Zug am Grundkörper von der Gehäuseinnenseite aus.

Eine weitere vorteilhafte Ausführungsform sieht vor, den Grundkörper mit Mitteln zur Verdrehsicherung des Grundkörpers in der Durchtrittsöffnung der Gehäusewand auszustatten. Hierbei könnte es sich um Rippen handeln, die ein geringes Übermaß gegenüber dem Durchmesser der Durchtrittsöffnung aufweisen, so dass diese sich unter Krafteinwirkung in der Gehäusewand verkrallen. Die Rippen können auch so dünn gestaltet sein, dass sie leicht federnd wirken, z.B. durch eine leichte Krümmung in eine Richtung.

Gehäusedurchführungen bzw. Kabelverschraubungen sind so ausgebildet, dass sie elektrische Leitungen, Kabel mit unterschiedlichen Durchmessern aufnehmen und fixieren können. Der Durchmesserunterschied wird dadurch kompensiert, dass durch das Aufschrauben Hutmutter auf den Grundkörper eine Kraft auf einen bekannten Klemmkäfig des Grundkörpers solange ausgeübt wird, bis dessen Klemmkäfig einen gleichmäßigen Druck auf das Kabel ausübt. Damit variiert die Einschraubtiefe der Hutmutter in Abhängigkeit vom Durchmesser des Kabels. Um nun die variierende Einschraubtiefe der Hutmutter im Hinblick auf den Kabeldurchmesser zu kompensieren, könnte der Anschlag des Grundkörpers federnd ausgeführt sein. Alternativ dazu oder auch kumulativ könnten die Abstützmittel der Hutmutter federnd ausgeführt sein.

Da es Anliegen jeder Gehäusedurchführung oder Kabelverschraubung ist, das Gehäuseinnere abzudichten, könnten bezüglich der doppelfunktionellen Hutmutter entsprechende vorteilhafte Abdichtmaßnahmen getroffen werden. Die Abstützmittel der Hutmutter könnten gleichzeitig als Mittel zur Abdichtung der Hutmutter gegenüber der Gehäusewand ausgebildet sein oder derartige Mittel zur Abdichtung umfassen. Im ersteren Fall ist die Doppelfunktion der Hutmutter noch um die Dichtfunktion erweitert. Das Abstütz- und Dichtmittel könnte bspw. ein elastomerer Zylinder im Sinne einer Manschette oder eines Gummibalges an die Hutmutter angeformt sein, der einerseits stabil bzw. biegesteif genug ist, die Abstützfunktion wahrzunehmen, andererseits aber auch elastisch verfombar sein muss, um die differierende Einschraubtiefe zu kompensieren. Weitere Ausführungsvarianten des Dichtmittels mit Abstützfunktion sind z.B. eine gezackte bzw. eine gewellte Gestaltung oder eine radialen Rollfalte ähnlich einer Waschmaschinenmanschette. Im zweiten Fall könnten die Abstützmittel der Hutmutter biegesteife Bauelemente sein, die von einer elastomeren Schicht umgeben sind. Auch hier gilt, dass die biegesteifen Abstützelemente dem von der Hutmutter beim Aufschrauben auf ein durchmesserkleines Kabel aufgebrachten Biegemoment nicht widerstehen dürfen, sondern die reversible Verformung zulassen. Die biegesteifen Abstützelemente könnten bspw. in Form von Stegen mit Knickstellen vorliegen, die um den Umfang des Grundkörpers koaxial zu dessen Längsachse verteilt sind und mit einem Ring zusammen einen Käfig ausbilden könnten.

Auch im Hinblick auf den Grundkörper ist es vorteilhaft, die erfindungsgemäße Gehäusedurchführung / Kabelverschraubung Mittel zur Abdichtung der Durchtrittsöffnung in der Gehäusewand vorzusehen. Bezüglich des Grundkörpers könnte das Abdichtmittel im Bereich des Anschlages auf der der Hutmutter gegenüberliegenden Gehäusewand, insbesondere an der Gehäuseinnenwand, angeordnet sein. Das Abdichtmittel könnte zwischen Anschlag und Gehäusewand platziert sein und seinerseits die Einschraubtiefe kompensieren. Es könnte als elastomere Flach- oder Runddichtung oder Dichtlippe vorliegen.

Die voranstehende Aufgabe wird nach einer zweiten Alternative durch die Merkmale des Patentanspruches 8 gelöst. Danach ist eine Gehäusedurchführung / Kabelverschraubung der in Rede stehenden Art derart ausgestaltet, dass die Hutmutter Mittel zur Abdichtung der Hutmutter gegenüber der Gehäusewand aufweist, wobei es sich insbesondere um einen elastomeren Zylinder im Sinne einer Manschette handelt.

Die aus dem Stand der Technik bekannte Hutmutter hat eine festgelegte Funktion. Sie dient zur Festlegung und Abdichtung des Kabels bzw. der elektrischen Leitung. Zur Befestigung des Grundkörpers in der Gehäusewand werden verschiedene Möglichkeiten angeboten. Zumeist wird eine Kontermutter auf ein zusätzliches Außengewinde aufgeschraubt und verspannt den Grundkörper an der Gehäusewand, wobei der von der Gehäuseinnenwand abragende Teil des Grundkörpers als Widerlager fungiert.

Kurz gefasst ist erfindungsgemäß erkannt worden, dass die Montage vereinfacht werden kann, wenn die Hutmutter neben ihrer auf das Kabel bezogenen Funktion eine zweite Funktion, nämlich die Befestigungsfunktion bzw. Verriegelungsfunktion bezogen auf den Grundkörper und die Gehäusewand wahrnehmen kann. Erfindungsgemäß wird die Verriegelung des Grundkörpers in axialer Richtung nun nicht durch eine zusätzliche Kontermutter erzielt, sondern ausschließlich durch die Hutmutter. Die Hutmutter kommt dabei in der Regel an der Gehäuseaußenseite zum Einsatz.

Im Zusammenwirken der zweiten Alternative der Erfindung mit der ersten Alternative der Erfindung bedeutet dies für die Montage, dass von der Gehäuseinnenseite der Grundkörper bis zum Anschlag durch die Durchtrittsöffnung hindurchgeführt wird und an der Außenseite in einem Vorgang - nämlich nur durch das Verschrauben der Hutmutter sowohl eine kabelbezogene Fixierung und Abdichtung als auch eine grundkörperbezogene Fixierung an der Gehäusewand erreicht wird. Weiterführend könnten auch die Mittel zur lösbaren Verbindung in Form von Dichtmitteln vorliegen oder mit zusätzlichen Dichtmitteln versehen sein, die die Abdichtung von Grundkörper und Gehäuse bewirken.

Nach einer bevorzugten Ausführungsform der doppelfunktionellen Hutmutter könnten den Abstützmitteln Mittel zur Abdichtung der Hutmutter an der gegenüberliegenden Gehäusewand, im Bereich zugeordnet sein.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung von drei Ausführungsbeispielen der Erfindung anhand der Zeichnung zu verweisen. In Verbindung mit der Erläuterung der angeführten Ausführungsbeispiele der Erfindung werden auch im allgemeinen bevorzugte Ausgestaltungen und Weiterbildungen der Lehre erläutert. In der Zeichnung zeigen
- **Fig. 1** bei a): eine entlang der Linie A-A aus Fig. 1b) längs geschnittene Darstellung eines ersten Ausführungsbeispiels der erfindungsgemäßen Gehäusedurchführung / Kabelverschraubung, betreffend die Erfindung nach der ersten Alternative, mit Verklemmung durch die Abdichtmittel der doppelfunktionellen Hutmutter,
- bei b): den Gegenstand von Fig. 1 a) in einer Vorderansicht,
- bei c): der Grundkörper aus Fig. 1 a) in einer Seitenansicht,
- **Fig. 2** bei a): in vergrößerter Seitenansicht, den Gegenstand aus Fig. 1a) mit montiertem Kabel kleinsten Durchmessers,
- bei b): in vergrößerter Seitenansicht, den Gegenstand aus Fig. 1a) mit montiertem Kabel größten Durchmessers,
- **Fig. 3** bei a): eine entlang der Linie A-A aus Fig. 3b) längs geschnittene Darstellung eines zweiten Ausführungsbeispiels der erfindungsgemäßen Gehäusedurchführung / Kabelverschraubung, betreffend die Erfindung nach der ersten und zweiten Alternative, mit Verklemmung durch die doppelfunktionelle Hutmutter und dortige Abdichtung,
- bei b): den Gegenstand von Fig. 3 a) in einer Vorderansicht,
- bei c): die Hutmutter aus Fig. 3 a) in einer Seitenansicht,
- **Fig. 4** bei a): in vergrößerter Seitenansicht, den Gegenstand aus Fig. 3a) mit montiertem Kabel kleinsten Durchmessers,
- bei b): in vergrößerter Seitenansicht, den Gegenstand aus Fig. 3a) mit montiertem Kabel größten Durchmessers,
- **Fig. 5** bei a): eine entlang der Linie A-A aus Fig. 5b) längs geschnittene Darstellung eines dritten Ausführungsbeispiels der erfindungsgemäßen Gehäusedurchführung / Kabelverschraubung, betreffend die Erfindung nach der ersten und zweiten Alternative, mit Verklemmung durch die doppelfunktionelle Hutmutter und Abdichtung am Grundkörper an der Gehäusewandinnenseite,
- bei b): den Gegenstand von Fig. 5 a) in einer Vorderansicht,
- bei c): den Grundkörper aus Fig. 5 a) in einer Seitenansicht,
- bei d): eine entlang der Linie B-B aus Fig. 5c) quer geschnittene Darstellung des Gegenstandes aus Fig. 5c) und
- **Fig. 6** bei a): in vergrößerter Seitenansicht, den Gegenstand aus Fig. 3a) mit montiertem Kabel kleinsten Durchmessers,
- bei b): in vergrößerter Seitenansicht, den Gegenstand aus Fig. 3a) mit montiertem Kabel größten Durchmessers.

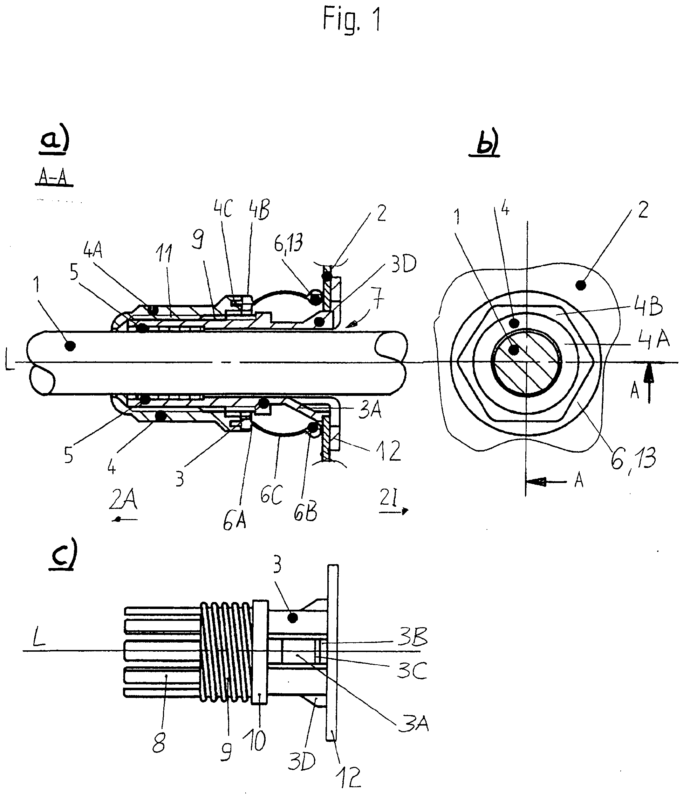

In den Figuren 1 bis 6 ist eine Gehäusedurchführung, nachfolgend stets als Kabelverschraubung bezeichnet, für zugentlastete, gegen Verdrehen gesicherte Kabel 1 zur Montage in einer Durchtrittsöffnung 7 einer Gehäusewand 2 gezeigt. Die Kabelverschraubung umfasst einen Grundkörper 3 und eine Hutmutter 4. Der Grundkörper 3 weist einen Klemmkäfig 8 mit biegsamen Lamellen auf, in den eine Kabeldichtung 5 eingesetzt ist. Außerdem ist ein Außengewinde 9 mit einer abschließenden Schulter 10 vorgesehen, auf das die Hutmutter 4 mit ihrem Innengewinde 11 aufgeschraubt ist und dabei den Klemmkäfig 8 mit Druck beaufschlagt und so das Kabel 1 hält und abdichtet.. Mit 2A ist die Gehäuseaußenseite, mit 2I ist die Gehäuseinnenseite bezeichnet. Aus den Fig. 1a), 2, 3a), 4, 5a), 6 ist ersichtlich, dass sich der Grundkörper 3 im Montagezustand zu beiden Seiten der Gehäusewand 2 durch die Durchtrittsöffnung 7 hindurch erstreckt und fixiert ist.

Der Grundkörper 3 ist bei allen drei Ausführungsbeispielen von der im Montagezustand der Hutmutter 4 gegenüberliegenden Seite der Gehäusewand 2 - hier von der Gehäuseinnenseite 2I - durch die Durchtrittsöffnung 7 bis zu einem Anschlag bzw. Flansch 12 durchgesteckt.

Der Grundkörper 3 wird durch die Durchtrittsöffnung 7 solange hindurchgeführt, bis der Flansch 12 zur Anlage an der Gehäusewand 2 auf der Gehäuseinnenseite 2I kommt.

Um den Grundkörper 3 mit der Gehäusewand 2 zur Erleichterung der Montage hilfsweise vorzufixieren, weist der Grundkörper 3 Mittel zur lösbaren Verbindung mit der Gehäusewand 2 in Form zweier Rasthaken 3A auf. Die Rasthaken 3A werden beim Einführen des Grundkörpers 3 von der Gehäuseinnenseite 2I durch die Durchtrittsöffnung 7 zur Gehäuseaußenseite 2A zusammengedrückt und nehmen nach dem Durchtauchen der Gehäusewand 2 ihre ursprüngliche Form wieder an. Damit die Rasthaken 3A federn können, sind diese nur an einer Seite mit dem Grundkörper 3 verbunden, an allen drei anderen Seiten ist ein Spalt zwischen Grundkörper 3 und Rasthaken 3A. Hier bietet der Bereich der Schulter 10 die Befestigungsgrundlage für die Rasthaken 3A. In den Fig. 1a) und 1c) ist gezeigt, dass der Rasthaken 3A eine Ausnehmung 3B und einen Vorsprung 3C aufweist, wodurch ein Formschluss erreicht wird. Während die Ausnehmung 3B an der Innenseite der Durchtrittsöffnung 7 zu liegen kommt, stützt sich Vorsprung 3C gegen die Gehäusewand 2 ab. Damit wird vermieden, dass sich der Rasthaken 3A bei starkem Zug auf den Grundkörper 3 von der Gehäusewand 2 abspreizt und bleibend verformt. Die Rasthaken 3A sind gegenüberliegend angeordnet.

Ebenfalls gegenüberliegend, jedoch um 90 Grad versetzt zu den Rasthaken 3A, sind zwei Rippen 3D vorgesehen, die mit dem hier nicht näher bezeichneten Durchmesser der Durchtrittsöffnung 7 der Gehäusewand 2 korrespondieren, wobei der maximale Außenabstand der beiden Rippen 3D ein wenig Übermaß gegenüber der Durchtrittsöffnung 7 in der Gehäusewand 2 haben. Dies bedeutet einen gewissen Kraftaufwand, um den Grundkörper 3 in die Durchtrittsöffnung 7 der Gehäusewand 2 einzusetzen, hat aber den Vorteil, dass sich die Rippen 3D in der Gehäusewand 2 verkrallen und der Grundkörper 3 damit gegen Verdrehung gesichert ist.

Die Fig. 1b) und 1a) zeigen, dass die Hutmutter 4 aus einem Kopfteil 4A und einem im Durchmesser erweiterten Fußteil 4B besteht. Der Kopfteil 4A hat die Aufgabe, mit dem Klemmkäfig 8 des Grundkörpers 3 zu korrespondieren und dessen Lamellen beim Aufschrauben zusammenzudrücken. Am Fußteil 4B ist ein Abdichtmittel 6 angespritzt, welches alternativ auch als zusätzliches Teil montiert sein könnte. Zum besseren Halt ist im Fußteil 4B der Hutmutter 4 eine Ringnut 4C angebracht, um einen Formschluss zwischen Hutmutter 4 und Abdichtmittel 6 zu erzielen. Das Abdichtmittel 6 führt die erste und die zweite Alternative der Erfindung zusammen, da das Abdichtmittel 6 gleichzeitig Abstützmittel 13 ist. Damit die Abstützfunktion ausgeführt werden kann, weist das Abdichtmittel 6 gemäß dem ersten Ausführungsbeispiel einen relativ dicken und eher unbeweglichen Bereich 6A in Korrespondenz zur Hutmutter 4 und ebenfalls einen relativ dicken und unbeweglichen Bereich 6B in Korrespondenz zur Gehäusewand 2 auf. Der Zwischenbereich 6C ist dünn und flexibel ausgeführt, damit der Abstand vom Anschluss an die Hutmutter 4 bis zur Gehäusewand 2 variabel sein kann. Zu diesem Zweck ist dieser Zwischenbereich 6C gewölbt gestaltet, damit dieser sich beim Zusammendrücken des Abdichtmittels 6 bezögen auf die Längsachse L nach außen verformen kann.

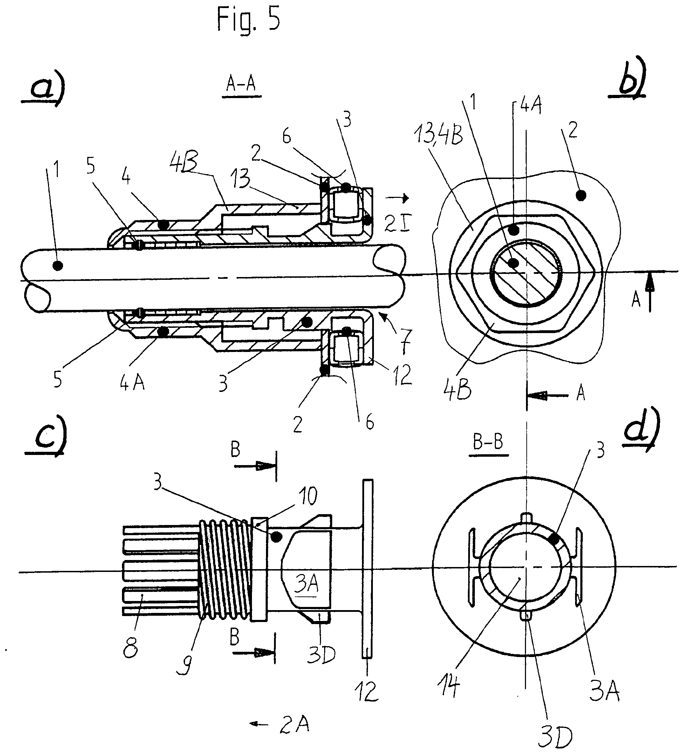

Die Montagereihenfolge ist nun wie folgt: Zunächst wird der Grundkörper 3 von der Gehäuseinnenseite 2I durch die Durchtrittsöffnung 7 der Gehäusewand 2 gedrückt bis der Grundkörper 3 in der Gehäusewand 2 über die Rasthaken 3A einrastet und über die Rippen 3D verdrehsicher ist. Anschließend wird die handelsübliche Kabeldichtung 5 in den Klemmkäfig 8 des Grundkörpers 3 eingesetzt. Diese kann auch bereits vormontiert mitgeliefert werden. Nun wird die Hutmutter 4 auf das Kabel 1 aufgefädelt und das Kabel 1 durch die in Fig. 5d) dargestellte Bohrung 14 des Grundkörpers 3 gezogen. Wenn das Kabel 1 z.B. durch Verdrahtung seine endgültige Position in Axialrichtung entlang der Längsachse L erreicht hat, wird die Hutmutter 4 auf den Grundkörper 3 aufgeschraubt, bis sich die Lamellen des Klemmkäfigs 8 des Grundkörpers 3 so verjüngt haben, dass die Lamellen mit einem definierten Druck auf die Kabeldichtung 5 drücken, die wiederum den Druck an das Kabel 1 weitergibt. Damit ist das Kabel 1 fixiert. Beim Aufschrauben stellt sich an dem Abdichtmittel 6 ein vom Kabeldurchmesser determinierter Abstand ein, so dass das Abdichtmittel 6 mit einer bestimmten Andruckkraft an der Gehäusewand 2 anliegt. Hierbei wölbt sich das Abdichtmittel 6 im Zwischenbereich 6C, abhängig vom Abstand zwischen seinen festeren Bereichen 6A und 6B, mehr oder weniger nach außen auf.

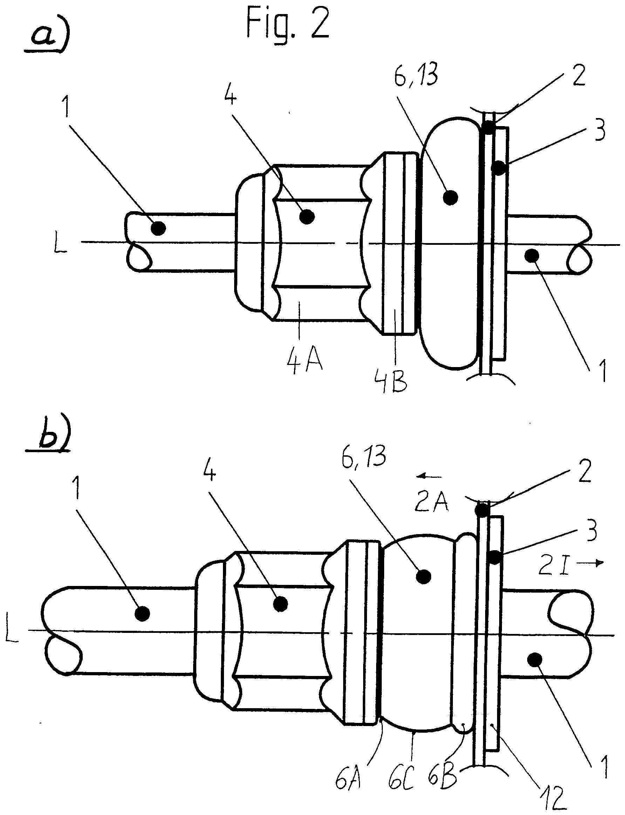

In Fig. 2b) ist dargestellt, wie sich das Abdichtmittel 6 bei dem Kabel 1 mit dem größten Durchmesser auswölbt. Da die Hutmutter 4 infolge des größten Kabeldurchmessers nicht besonders weit aufgeschraubt werden kann, wölbt sich der Zwischenbereich 6C nur gering aus. Dagegen zeigt Fig. 2a) eine starke Wölbung des Zwischenbereiches 6C sowie eine starke Zusammenpressung des Bereiches 6B, wenn das kleinste Kabel 1 montiert ist. Das Abdichtmittel 6 weist im Grunde eine mehr oder weniger gestauchte Fassform mit konvexer Wölbung in Bezug zur Längsachse L auf.

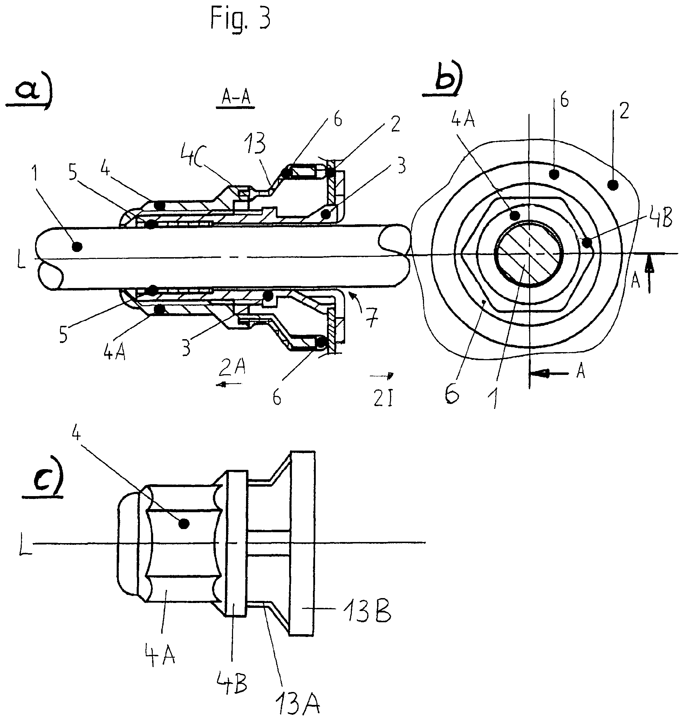

In Fig. 3 wird ein zweites Ausführungsbeispiel gezeigt, das ebenfalls die erste und die zweite Alternative der Erfindung zusammenführt. Wie beim ersten Ausführungsbeispiel wird die Gehäusewand 2 zwischen Flansch 12 des Grundkörpers 3 und der Hutmutter 4 eingeklemmt, um die Festigkeit der Vorfixierung nicht nur den Rasthaken 3A und den Rippen 3D des Grundkörpers 3 zu überlassen. Hierzu ist an den Fußteil 4B ein Abstützmittel 13 angeordnet, das zusätzlich mit einem Abdichtmittel 6 konfektioniert ist. Aus Fig. 3b) ergibt sich, dass das Abdichtmittel 6 an der Außenoberfläche des Abstützmittels 13 angebracht ist und sich über den gesamten Umfang und die gesamte Länge des Abstützmittels 13 erstreckt. In Fig. 3b) ist das Abstützmittel 13 verdeckt und deshalb nicht mit einer Bezugsziffer versehen. In Fig. 3c) ist die Hutmutter 4 unter Weglassung des Abdichtmittels 6 gezeigt. Es sind vier um jeweils 90° versetzte Stege 13A und ein das Abstützmittel 13 bzw. die Hutmutter 4 gehäusewandseitig abschließender Ring 13B zur Anlage an der Gehäusewand 2 vorgesehen. Aus den Stegen 13A und dem Ring 13B ist ein Käfig gebildet. Auch bei dem zweiten Ausführungsbeispiel sind Rasthaken 3A und Rippen 3B wie beim ersten Ausführungsbeispiel vorgesehen, um zu vermeiden, dass beim Durchschieben des Kabels 1 und beim Aufschrauben der Hutmutter 4 der Grundkörper 3 nicht wieder durch die Durchtrittsöffnung 7 der Gehäusewand 2 im Richtung Gehäuseinnenseite 2I hindurchgedrückt wird.

Das Einklemmen der Gehäusewand 2 zwischen Flansch 12 des Grundkörpers 3 und der Hutmutter 4 ist seitens der Hutmutter 4 so gelöst, dass der Ring 13B der Hutmutter 4 bzw. des Abstützmittels 13 mit der Gehäusewand 2 korrespondiert. Dieser Ring 13B ist durch flexible Stege 13A an der Hutmutter 4 angebunden. Die Stege 13A sind so gestaltet, dass unter Berücksichtigung der Einschraubtiefe in Abhängigkeit vom Kabeldurchmesser ein variabler Abstand einstellbar ist. Dazu knicken beim vorliegenden zweiten Ausführungsbeispiel die Stege 13A des Abstützmittels 13 nach innen ein. Es sind auch andere Ausführungsformen denkbar, bei denen die Stege sich nach außen ausbauchen.

Das Abdichtmittel 6 umschließt das Abstützmittel 13 der Hutmutter 4. Beim zweiten Ausführungsbeispiel ist das Abdichtmittel 6 ähnlich wie beim ersten Ausführungsbeispiel direkt an den Fußteil 4B der Hutmutter 4 unter Verfüllung der Nut 4C angespritzt. Alternativ zum Anspritzen könnte das Abdichtmittel 6 als Manschette ausgebildet sein, die über das Abstützmittel 13 gezogen wird. Das Abstützmittel 13 ist im vorliegenden zweiten Ausführungsbeispiel integraler Bestandteil der Hutmutter 4.

Die Vorgehensweise bei der Montage entspricht der zum ersten Ausführungsbeispiel beschriebenen Vorgehensweise. Beim Aufschrauben der Hutmutter 4 auf den Grundkörper 3 ist zu berücksichtigen, dass durch das Andrücken des Rings 13B auf die Gehäusewand 2 ein zusätzliches Moment auftritt, welches aufgebracht werden muss, aber dem Festklemmen des Kabels 1 nicht zur Verfügung steht.

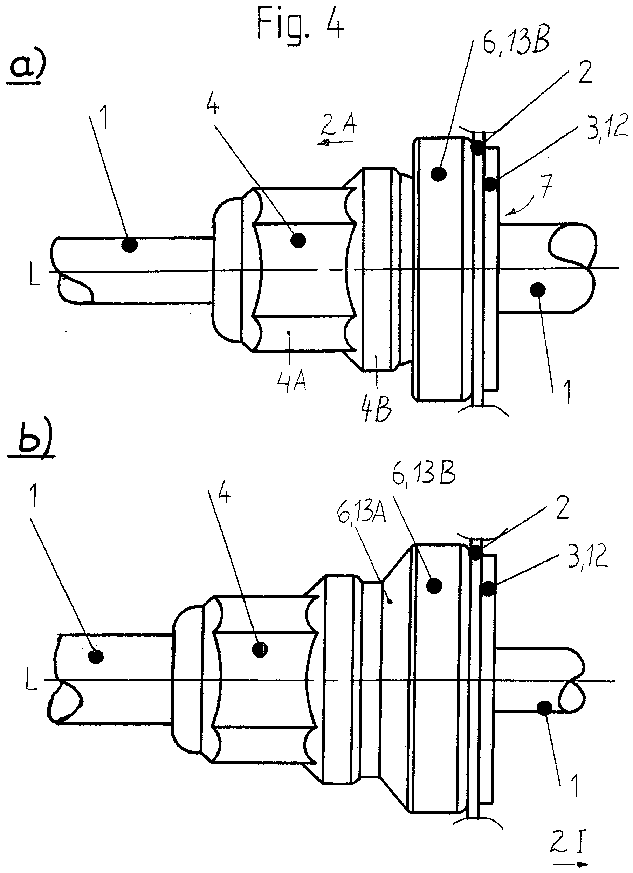

In Fig. 4a) ist dargestellt, wie sich das Abstützmittel 13 bei dem Kabel 1 mit dem kleinsten Durchmesser ändert. Die Stege 13A sind eingeknickt. Die Stege 13A haben einen zur Längsachse L parallelen Abschnitt, der zum Fußteil 4B der Hutmutter 4 benachbart ist und einen zum Ring 13B hin divergierenden Abschnitt. Einknicken meint, dass der divergierende Abschnitt in Richtung Orthogonalstellung bezogen auf die Längsachse L der Kabelverschraubung verbracht wird. Da die Hutmutter 4 infolge des größten Kabeldurchmessers gemäß Fig. 4b) nicht besonders weit aufgeschraubt werden kann, bleibt das Abstützmittel 13 in seiner Käfigform mit Stegen, deren divergierende Abschnitt schräg zum Ring 13B verläuft und sich eben nicht - wie beim kleinsten Kabeldurchmesser nahezu parallel zum Ring 13B erstreckt.

Bei dem dritten Ausführungsbeispiel in Fig. 5 ist das Abdichtmittel 6 an der Gehäusewand 2 auf der Gehäuseinnenseite 2I angeordnet. Das dritte Ausführungsbeispiel erfordert, dass der Grundkörper 3 das Kabel 1 öffnungsfrei umschließt. Deshalb ist für den Rasthaken 3A eine andere Konstruktionssystematik gewählt als beim ersten und zweiten Ausführungsbeispiel. Die Rasthaken 3A sind - wie besonders gut in Fig. 5d) gezeigt - seitlich an den Grundkörper 3 als Leisten angeformt. Beim Durchschieben des Grundkörpers 3 durch die Durchtrittsöffnung 7 der Gehäusewand 2 werden die Leisten in Richtung Grundkörper 3 radial nach innen zusammengedrückt, um nach Passieren der Durchtrittsöffnung 7 wieder auseinanderzuschnappen. Auch beim dritten Ausführungsbeispiel sind am Grundkörper 3 Rippen 3D vorgesehen, die mit der Durchtrittsöffnung 7 der Gehäusewand 2 korrespondieren, und vermeiden, dass sich der Grundkörper 3 in der Durchtrittsöffnung 7 der Gehäusewand 2 drehen lässt. Die Hutmutter 4 weist als Abstützmittel 13 eine Verlängerung auf, die sich vom Fußteil 4B der Hutmutter bis zur Gehäusewand 2 an der Gehäuseaußenseite 2A erstreckt. Wie in Fig. 5a) und Fig. 5b) angegeben, kann das Abstützmittel 13 auch als Verlängerung des Fußteils 4B der Hutmutter 4 verstanden werden. Das Abstützmittel 13 ermöglicht, dass die Gehäusewand 2 zwischen Hutmutter 4 und Grundkörper 3 eingeklemmt werden kann. Fakultativ kann zumindest an der sich an der Gehäusewand 2 abstützenden Stirnseite des Abstützmittels 13, bzw. der Verlängerung, ein zusätzliches Abdichtmittel 6 vorgesehen sein.

Das Abdichtmittel 6 ist beim dritten Ausführungsbeispiel als Hohlkörper ausgebildet, damit sich ein variabler Abstand zwischen Gehäusewand 2 und Flansch 12 am Grundkörper 3 einstellen kann. Je nach gewünschter Klemmkraft kann die Gehäusedichtung 6 stärker oder schwächer ausgeführt werden.

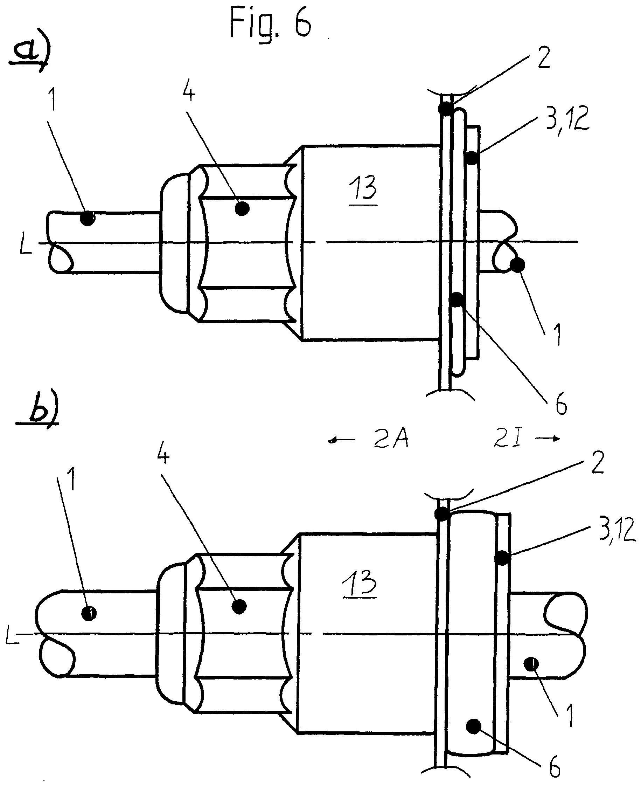

In Fig. 6a) ist dargestellt, wie sich das das Abdichtmittel 6 bei dem Kabel 1 mit dem kleinsten Durchmesser ändert. Die Abdichtmittel 6 ist zusammengepresst. Das Abstützmittel 13 ist als Verlängerung des Fußteils 4B der Hutmutter 4 unveränderlich. Da die Hutmutter 4 infolge des größten Kabeldurchmessers gemäß Fig. 6b) nicht besonders weit aufgeschraubt werden kann, bleibt die Abdichtmittel 6 entspannt.

Die Kabelmontage beim dritten Ausführungsbespiel entspricht der beim ersten und zweiten Ausführungsbeispiel.

## Patentansprüche

1. Gehäusedurchführung für zugentlastete, gegen Verdrehen gesicherte Kabel (1) zur Montage in einer Durchtrittsöffnung (7) einer Gehäusewand (2), mit einem Grundkörper (3) und einer Hutmutter (4), wobei der Grundkörper (3) eine Kabeldichtung (5) umfasst und wobei die Hutmutter (4) hierüber befestigbar ist und wobei der Grundkörper (3) von der im Montagezustand der Hutmutter (4) gegenüberliegenden Seite der Gehäusewand (2) durch die Durchtrittsöffnung (7) bis zu einem Anschlag (12) durchsteckbar ist,
**dadurch gekennzeichnet,**
**dass** die Hutmutter (4) Mittel zur lösbaren Verbindung des Grundkörpers (3) und der Hutmutter (4) mit der Gehäusewand (2) aufweist, wobei es sich um Mittel (13) handelt, die sich gegen die Gehäusewand (2) stützen und damit die Gehäusewand (2) zwischen Grundkörper (3) und Hutmutter (4) einklemmen.

2. Gehäusedurchführung nach Anspruch 1, **dadurch gekennzeichnet, dass** der Grundkörper (3) Mittel zur lösbaren Verbindung mit der Gehäusewand (2) aufweist, wobei es sich bei den Mitteln insbesondere um Rasthaken (3A) handelt.

3. Gehäusedurchführung nach Anspruch 1 oder 2, **dadurch gekennzeichnet, dass** der Grundkörper (3) Mittel zur Verdrehsicherung des Grundkörpers (3) in der Durchtrittsöffnung (7) der Gehäusewand (2) aufweist, wobei es sich insbesondere um Rippen (3D) handelt.

4. Gehäusedurchführung nach einem der Ansprüche 1 bis 3, **dadurch gekennzeichnet, dass** der Anschlag (12) am Grundkörper (3) federnd ausgeführt ist oder dass die Mittel zur lösbaren Verbindung an der Hutmutter (4) federnd ausgeführt sind, um die variierende Einschraubtiefe der Hutmutter (4) im Hinblick auf den Kabeldurchmesser zu kompensieren.

5. Gehäusedurchführung nach einem der Ansprüche 1 bis 4, **dadurch gekennzeichnet, dass** die Mittel zur lösbaren Verbindung des Grundkörpers (3) und der Hutmutter (4) mit der Gehäusewand (2) Mittel zur Abdichtung (6) der Hutmutter (4) gegenüber der Gehäusewand (2) umfassen oder als Mittel zur Abdichtung (6) der Hutmutter (4) gegenüber der Gehäusewand (2) ausgebildet sind.

6. Gehäusedurchführung nach Anspruch 5, **dadurch gekennzeichnet, dass** es sich bei dem Mittel zur Abdichtung (6) der Hutmutter (4) um einen elastomeren Zylinder (6) im Sinne einer Manschette handelt.

7. Gehäusedurchführung nach einem der Ansprüche 1 bis 6, **dadurch gekennzeichnet, dass** der Grundkörper (3) auf der der Hutmutter (4) gegenüberliegenden Seite der Gehäusewand (2) Mittel zur Abdichtung (6) des Grundkörpers (3) gegenüber der Gehäusewand (2) aufweist, wobei es sich bei den Mitteln zur Abdichtung insbesondere um eine elastomere Flach- oder Runddichtung handelt.

8. Gehäusedurchführung für zugentlastete, gegen Verdrehen gesicherte Kabel (1) zur Montage in einer Durchtrittsöffnung (7) einer Gehäusewand (2), mit einem Grundkörper (3) und einer Hutmutter (4), wobei der Grundkörper (3) eine Kabeldichtung (5) umfasst und wobei die Hutmutter (4) hierüber befestigbar ist und wobei der Grundkörper (3) von der im Montagezustand der Hutmutter (4) gegenüberliegenden Seite der Gehäusewand (2) durch die Durchtrittsöffnung (7) bis zu einem Anschlag (12) durchsteckbar ist,
**dadurch gekennzeichnet, dass** die Hutmutter (4) Mittel zur Abdichtung (6) der Hutmutter (4) gegenüber der Gehäusewand (2) aufweist, wobei es sich insbesondere um einen elastomeren Zylinder (6) im Sinne einer Manschette handelt.

## Claims

1. A housing feed-through for strain-relieved cables (1) secured against rotation, for fitting in a through-opening (7) of a housing wall (2), with a base body (3) and a cap nut (4), wherein the base body (3) comprises a cable seal (5) and wherein the cap nut (4) can thereby be fastened and wherein the base body (3) can be inserted, from the side of the housing wall (2) lying opposite the cap nut (4) in the assembly position, through the through-opening (7) up to a stop (12),
**characterised in**
**that** the cap nut (4) comprises means for the detachable connection of the base body (3) and the cap nut (4) to the housing wall (2), wherein the means (13) are such that they rest against the housing wall (2) and thus clamp the housing wall (2) between the base body (3) and the cap nut (4).

2. The housing feed-through according to claim 1, **characterised in that** the base body (3) comprises means for the detachable connection to the housing wall (2), wherein the means are in particular snap-in hooks (3A).

3. The housing feed-through according to claim 1 or 2, **characterised in that** the base body (3) comprises means for the anti-rotation securing of the base body (3) in the through-opening (7) of the housing wall (2), wherein they are in particular ribs (3D).

4. The housing feed-through according to any one of claims 1 to 3, **characterised in that** the stop (12) on the base body (3) is constituted spring-loaded or that the means for the detachable connection to the cap nut (4) are constituted spring-loaded in order to compensate for the varying screw-in depth of the cap nut (4) with regard to the cable diameter.

5. The housing feed-through according to any one of claims 1 to 4, **characterised in that** the means for the detachable connection of the base body (3) and the cap nut (4) to the housing wall (2) comprise means for the sealing (6) of the cap nut (4) with respect to the housing wall (2) or are constituted as means for the sealing (6) of the cap nut (4) with respect to the housing wall (2).

6. The housing feed-through according to claim 5, **characterised in that** the means for the sealing (6) of the cap nut (4) is an elastomer cylinder (6) in the sense of a collar.

7. The housing feed-through according to any one of claims 1 to 6, **characterised in that** the base body (3) on the side of the housing wall (2) lying opposite to the cap nut (4) comprises means for the sealing (6) of the base body (3) with respect to the housing wall (2), wherein the means for the sealing is in particular an elastomer flat or round seal.

8. A housing feed-through for strain-relieved cables (1) secured against rotation, for fitting in a through-opening (7) of a housing wall (2), with a base body (3) and a cap nut (4), wherein the base body (3) comprises a cable seal (5) and wherein the cap nut (4) can thereby be fastened and wherein the base body (3) can be inserted, from the side of the housing wall (2) lying opposite the cap nut (4) in the assembly, through the through-opening (7) up to a stop (12), **characterised in that** the cap nut (4) comprises means for the sealing (6) of the cap nut (4) with respect to the housing wall (2), wherein it is in particular an elastomer cylinder (6) in the sense of a collar.

## Revendications

1. Passage de boîtier pour des câbles exempts de traction, sécurisés contre une torsion (1) destiné à être montés dans un orifice de passage (7) d'une paroi de boîtier (2), avec un corps de base (3) et un écrou borgne (4), le corps de base (3) comprenant un joint de câble (5) et l'écrou borgne (4) pouvant être fixé par l'intermédiaire de celui-ci et le corps de base (3) étant enfichable à partir du côté de la paroi de boîtier (2) opposée à l'écrou borgne (4) en position de montage, à travers l'orifice de passage (7) jusqu'à une butée (12)
**caractérisé en ce**
**que** l'écrou borgne (4) comporte des moyens pour l'assemblage amovible du corps de base (3) et de l'écrou borgne (4) avec la paroi de boîtier (2), sachant qu'il s'agit de moyens (13) qui s'appuient contre la paroi de boîtier (2) et serrent de ce fait la paroi de boîtier (2) entre le corps de base (3) et l'écrou borgne (4).

2. Passage de boîtier selon la revendication 1, **caractérisé en ce que** le corps de base (3) comporte des moyens pour l'assemblage amovible avec la paroi de boîtier (2), sachant que les moyens sont notamment des crochets d'enclenchement (3A).

3. Passage de boîtier selon la revendication 1 ou 2, **caractérisé en ce que** le corps de base (3) comporte des moyens pour la sécurité anti-rotation du corps de base (3) dans l'orifice de passage (7) de la paroi de boîtier (2), sachant qu'il s'agit notamment de nervures (3D).

4. Passage de boîtier selon l'une quelconque des revendications 1 à 3, **caractérisé en ce que** la butée (12) sur le corps de base (3) est réalisée en version élastique ou **en ce que** les moyens pour l'assemblage amovible sur l'écrou borgne (4) sont réalisés en version élastique, pour compenser la profondeur de vissage variable de l'écrou borgne (4) au niveau du diamètre du câble.

5. Passage de boîtier selon l'une quelconque des revendications 1 à 4, **caractérisé en ce que** les moyens pour l'assemblage amovible du corps de base (3) et de l'écrou borgne (4) avec la paroi de boîtier (2) comprennent des moyens pour assurer l'étanchéité (6) de l'écrou borgne (4) par rapport à la paroi de boîtier (2) ou sont conçus sous la forme de moyens destinés à assurer l'étanchéité (6) de l'écrou borgne (4) par rapport à la paroi de boîtier. (2).

6. Passage de boîtier selon la revendication 5, **caractérisé en ce qu'**en ce qui concerne les moyens destinés à assurer l'étanchéité (6) de l'écrou borgne (4), il s'agit d'un cylindre élastomère (6) dans le sens d'une manchette.

7. Passage de boîtier selon l'une quelconque des revendications 1 à 6, **caractérisé en ce que** le corps de base (3) sur le côté de la paroi de boîtier (2) opposé à l'écrou borgne (4) comporte des moyens destinés à assurer l'étanchéité (6) du corps de base (3) par rapport à la paroi de boîtier (2), s'agissant notamment en ce qui concerne les moyens destinés à assurer l'étanchéité d'un joint élastomère plat ou rond.

8. Passage de boîtier pour des câbles exempts de traction, sécurisés contre une torsion (1) destiné à être monté dans un orifice de passage (7) d'une paroi de boîtier (2), avec un corps de base (3) et un écrou borgne (4), le corps de base (3) comprenant un joint de câble (5) et l'écrou borgne (4) pouvant être fixé par l'intermédiaire de celui-ci et le corps de base (3) étant enfichable à partir du côté de la paroi de boîtier (2) opposée à l'écrou borgne (4) en position de montage, à travers l'orifice de passage (7) jusqu'à une butée (12),
**caractérisé en ce**
**que** l'écrou borgne comporte (4) des moyens pour assurer l'étanchéité (6) de l'écrou borgne (4) par rapport à la paroi de boîtier (2), s'agissant notamment d'un cylindre élastomère(6) dans le sens d'une manchette.
